Europäisches Patentamt

(19) European Patent Office

Office européen des brevets

(11) Publication number: **0 312 196 B1**

(12) **EUROPEAN PATENT SPECIFICATION**

(45) Date of publication of patent specification:
06.03.91 Bulletin 91/10

(51) Int. Cl.⁵: **F16J 15/16, F16J 15/34**

(21) Application number: 88307508.7

(22) Date of filing: 12.08.88

(54) **Mechanical seal lubrication improvement.**

(30) Priority: 15.10.87 US 108965

(43) Date of publication of application:
19.04.89 Bulletin 89/16

(45) Publication of the grant of the patent:
06.03.91 Bulletin 91/10

(84) Designated Contracting States:
DE FR NL SE

(56) References cited:
DE-A- 2 640 687
US-A- 3 236 529
US-A- 3 486 760
US-A- 3 495 840
US-A- 3 498 620
US-A- 4 502 693

(73) Proprietor: BW/IP INTERNATIONAL INC.
200 Oceangate, Suite 900
Long Beach California 90802-4371 (US)

(72) Inventor: Hufford, Larry A.
1004 Olly Court
Vista California 92083 (US)
Inventor: Wentworth, Robert Seabury
Deseased (US)
Inventor: Wentworth, Benning
3N 347 Loretta Drive
St.Charles Illinois 60174 (US)

(74) Representative: Allden, Thomas Stanley et al
A.A. THORNTON & CO. Northumberland
House 303-306 High Holborn
London WC1V 7LE (GB)

Jouve, 18, rue Saint-Denis, 75001 PARIS

## Description

This invention relates to mechanical seal assemblies.

Mechanical seals depend on a thin film of the liquid that they are sealing to lubricate and cool their opposing seal faces. Conditions such as vaporization, air trapped in piping and other conditions when fluid pressure in the housing is relatively low can cause seals to lose the film with consequential damage or even complete failure. In addition, at start-up, the film is generally non-existent. It is common practice to provide a flow of liquid into the seal area to avoid the failure of the seal. Generally, liquid is injected into the seal area at a higher pressure than the fluid in the stuffing box. This adds to the expense of extra equipment and a supply of additional liquid. The injected liquid may simply be tapped from pump discharge, but this results in loss of recirculation energy and may require pressure dropping means such as orifices subject to problems of clogging and erosion. Where fluid is added, there are often considerable cost measures consequent to adding extra fluid to the process fluid being pumped. In many cases, the injected fluid is merely serving to provide turbulence and to wash away a slow buildup of gas from the stuffing box.

In DE-A-2640687 there is generally disclosed a mechanical seal assembly for machinery having a housing in which fluid is to be retained and a shaft extending through at least a portion of the housing ; the seal assembly comprising a first non-rotatable seal ring positioned abutting the housing and surrounding the shaft, the first seal ring having a seal face, a second rotatable seal ring positioned surrounding the shaft and connected thereto for rotation therewith, the second rotatable seal ring having a seal face positioned opposite the seal face of the first seal ring so that a fluid film between the seal ring faces is allowed when the machinery is operated, the film extending from a first location adjacent the shaft to a second location spaced from the shaft, and means including a baffle for admitting fluid under pressure to the second location.

More particularly, the mechanical seal assembly of the aforesaid DE-A-2640687 is designed for use in an environment presenting high fluid pressures and elevated operating temperatures, and the fluid admitted under pressure to the second location is cooled sealed fluid which is supplied to cool the seal faces. The first non-rotatable seal ring is a carbon seal ring use of which in high fluid pressures has only met with limited success since carbon does not possess sufficient structural rigidity to withstand the differential pressure between the sealed fluid within the housing which exerts pressure upon the outer circumferential surface of the carbon seal ring and atmospheric pressure acting on the inner annular surface thereof. Such differential pressure causes distortion of the carbon seal ring with a resultant premature failing of the seal.

To overcome that problem, the outer circumferential surface of the carbon seal ring is protected from exposure to the pressure of the sealed fluid by that ring being supported upon a rigid back-up ring and a rigid annular retainer being provided to overlie the entire outer circumference of the carbon seal ring. The baffle is provided to cooperate with the annular retainer to define a space through which the cooled sealed fluid is supplied to the second location and thence into the seal area adjacent the rotatable and non-rotatable seal rings.

The present invention is concerned with a different problem, namely to ensure an adequate supply of fluid to the seal faces of the rotatable and non-rotatable seal rings for the purpose of lubricating such faces both at start-up and at other times such as when the fluid pressure in the housing is low.

For that purpose the invention provides a mechanical seal assembly as generally disclosed in DE-A-2640687 as aforesaid and which is characterized in that an annular notch is provided in the first seal ring, the baffle has at least a portion received in the notch and defining with the first seal ring a restricted passage therebetween for the flow of lubricating fluid to the second location, the baffle portion has a surface closely adjacent the seal face of the second seal ring and defining a restricted space therebetween, and the restricted space between the baffle portion surface and the seal face of the second seal ring provides a restriction to fluid flow greater than that provided by the restricted passage between the baffle portion and the first seal ring.

The advantage of the invention is that it minimizes film loss between the seal faces of the rotatable and non-rotatable seal rings as might otherwise occur especially when the fluid pressure in the housing is low, thereby ensuring proper lubrication thereof.

The baffle can be supplied as an integral part of a stationary element and as a part of a cartridge, or can be provided as a separate insert, or as part of a seal flange or gland, i.e., as part of the housing of the mechanical seal assembly.

In one form of the invention, an annular baffle is fixedly positioned over the seal rings, the non-rotatable one of which is received in a closure member of the housing with the other rotatable seal ring being resiliently urged toward the non-rotatable seal ring. The annular baffle has a radially disposed ring-like portion which extends below the outer surface of the rotatable seal ring, so that a portion of the face of the rotatable seal ring is closely adjacent to a portion of the face of the ring-like portion to define the restricted space therebetween. The opposite surface of the ring-like portion and its outer cylindrical surface are adjacent but not so close to the surfaces of an annular notch in the non-rotatable seal ring, thus forming the restricted passage for supplying lubricating fluid to the opposing seal faces. Lubricating fluid is injected into the restricted passage to the second location to lubricate the seal faces from a source outside the housing, the restricted space restricting egress from the second location thereby to increase the pressure of the fluid to the seal faces.

In a second form of the invention, a ring-like non-rotatable member is positioned in the annular notch of the non-rotatable seal ring, so as to provide the restricted passage therethrough, and the face of the ring-like member is closely adjacent to a portion of the face of the rotatable seal ring to define the restricted space in a manner similar to that described heretofore. Lubricating fluid is supplied to the restricted passage to flow via the second location to the opposing seal faces with the restricted space inhibiting egress as before.

Attention is also drawn to the following documents :

US-A-3236529 teaches supplying lubricating fluid to the opposing seal faces of a seal by using the operating pressure of the pump discharge fluid to force some of the liquid being pumped back into the stuffing box.

US-A-3486760 teaches supplying lubricating fluid to the opposing seal faces of a pair of seal rings through drilled passageways or bores in the non-rotatable seal ring to arcuate grooves in the non-rotatable seal ring face. A coupler connects the passageways in the seal ring to a source of lubricating fluid.

US-A-3495840 teaches supplying a lubricating fluid to generally the centre of the opposing seal faces of a pair of seal rings through drilled passages or bores in the non-rotatable seal ring and its back-up ring to arcuate grooves in the non-rotatable seal ring face. The fluid flows or is pumped outward across the opposing seal faces to a discharge location.

US-A-3498620 teaches structure similar to that taught by US-A-3495840 and adds a time-delay means for operating the fluid injection circuit to supply the lubricating fluid to the seal faces.

Finally, US-A-4502693 teaches supplying a sealing fluid at a pressure in excess of a pressure of a process fluid within the compressor structure when the compressor is not operating. The object is to keep bushing surfaces wet whenever a process gas may come in contact with a bushing surface. The sealing fluid traverses several restricted fluid passageways from its intake location to its outlet. Also provided is a bushing having radial surfaces exposed to fluid pressure which surfaces are sized to have "areas such that there is a high enough pressure unbalance across the bushing urging" a face thereof against a seal liner "to prevent axial movement of the bushing but low enough so that the bushing will not float with the shaft during operation ...".

In order that the invention may be well understood, the aforesaid two forms thereof, which are given by way of example, will now be described with reference to the accompanying drawings, in which :

Figure 1 is a partial sectional view of a mechanical seal assembly embodying the invention ;

Figure 2 is a sectional view taken on line 2-2 of Figure 1 ;

Figure 3 is an enlarged sectional view of the circled part of Figure 1 ; and

Figure 4 is a partial sectional view of a second embodiment of the mechanical seal assembly.

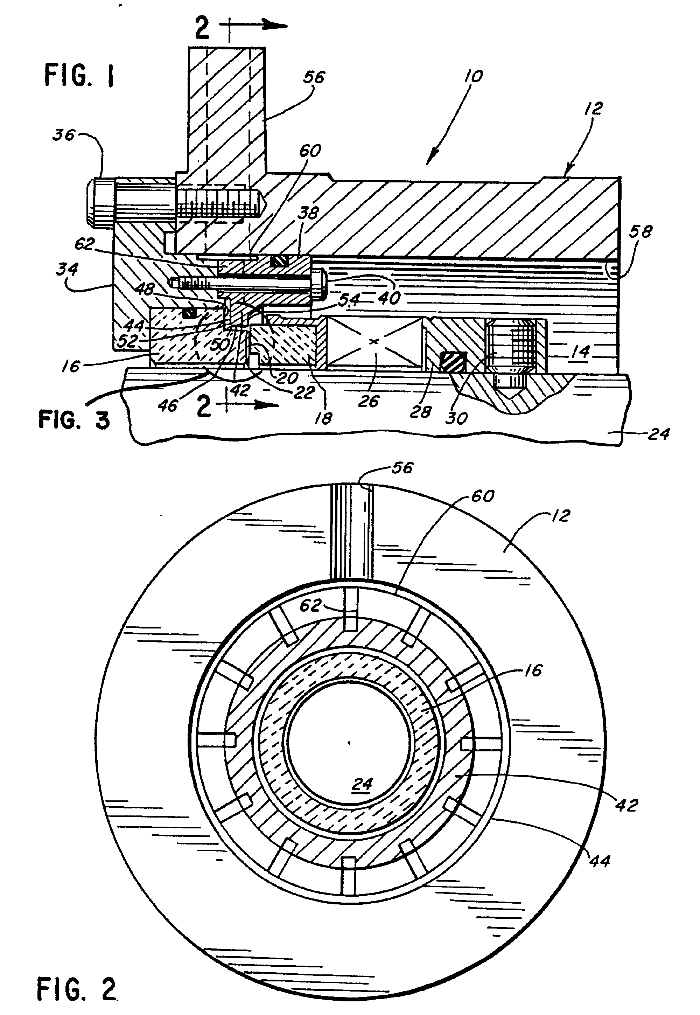

Referring first to Figures 1 to 3, a mechanical seal assembly 10 is disposed within a fluid machine, not shown, as for example a pump and the like, having a seal housing 12 defining a generally cylindrical seal chamber 14. The seal assembly 10 comprises a pair of seal rings 16 and 18, each of which has a lapped seal face 20 and 22 opposing one another. The seal ring 16 is relatively stationary and non-rotatable while the seal ring 18 is rotatable with the shaft 24 of the fluid machine. The seal ring is resiliently urged toward the seal ring 16 by suitable means 26, as for example, a coiled compression spring or a bellows and the like. The seal ring 18 is connected to the shaft for rotation therewith by the resilient means 26 and a setting block 28, screw means 30 being used to secure the block 28 to the shaft 24 and to permit the axial positioning thereof with respect to the shaft 24.

The stationary, non-rotatable seal ring 16 is positioned in a shouldered, annular ring-like closure member or seal flange 34 secured to the housing 12 by a plurality of bolts and the like 36. An annular baffle means 38 is circumferentially arranged about the seal rings 16 and 18 and is secured to the member 34 by a plurality of bolts 40. The baffle means 38 cooperates with other elements of the seal assembly to provide a unique lubricant flow path to the opposing seal faces 20 and 22 as will hereafter be explained.

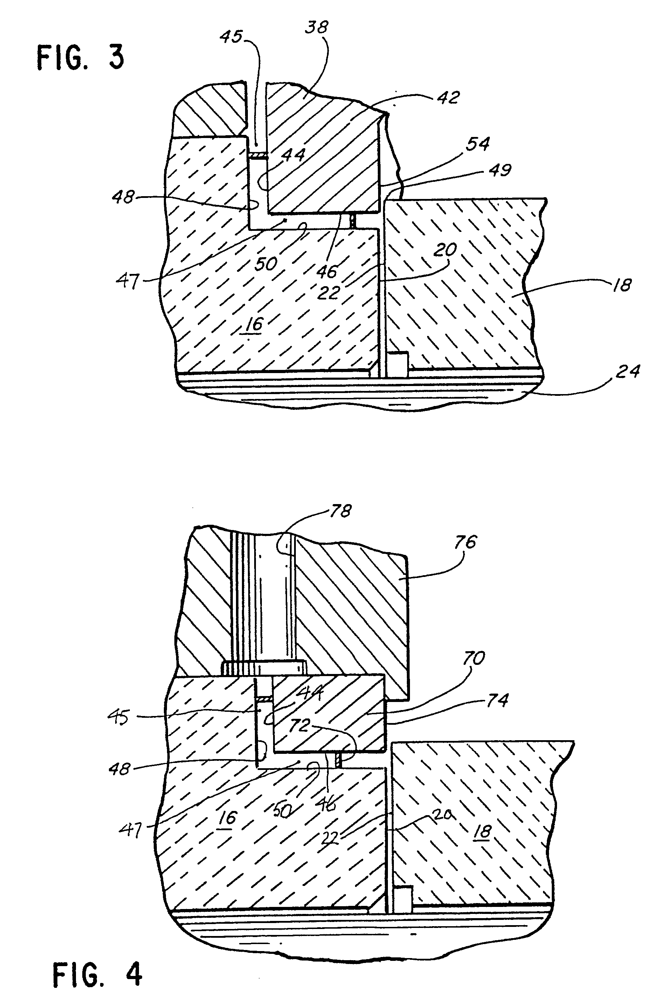

As illustrated in Figs. 1 and 3, the baffle means 38 has a radially depending portion 42 which is positioned so that two of its defining surfaces 44 and 46 are closely adjacent to the surfaces 48 and 50 of an annular notch 52 in the seal ring 16, to define passageways 45 and 47 (see especially Fig. 3), while the remaining defining surface 54 is closely adjacent to a portion of the seal face 22 of the seal ring 18 to define a passageway 49. The spacing between the surface 54 and the surface of the seal face 22 is much less than the spacing between the surfaces 44 and 48, and 46 and 50. In other words, the passageway 49 is more restricted than the passageways 45 and 47.

The housing 12 is provided with a generally radially positioned bore 56 which terminates at the interior cylindrical surface 58 of the housing 12. An annular slot 60 is provided in the outer periphery of the baffle means 38 and the closure member or seal flange 34, and the baffle means is provided with one or more radially arranged passages or slots 62. Lubricating fluid is introduced as by being injected via a conduit or the like, not shown, to the bore 56 and thus into the annular slot 60, through the passages 62, between the baffle and the seal ring 16 to a location immediately adjacent to the opposing seal faces 20 and 22, the restriction between the surface 54 and the seal face 22 increasing the pressure of the fluid to the seal faces to provide improved lubrication of the seal faces especially when the pressure of the process fluid is relatively low.

The baffle arrangement 38 can be constructed as an integral part of the housing 12, or as part of the closure member or seal flange 34 if desired.

Turning now to Fig. 4, a second embodiment of the invention is illustrated in which a ring member 70 is positioned in the notch 52 of the seal ring 16, the ring member 70 being spaced from the notch surfaces 48 and 50 by spacer means 72, such that the lower portion of the face 74 of the ring member 70 is closely adjacent to the seal face 22. The ring member 70 abuts a closure member 76 having a passageway 78 therein to provide a path for the flow of lubricating fluid to the seal faces 20 and 22, as in the first embodiment of the invention.

One of the prime objectives of this invention is to insure an adequate flow of lubricating fluid to the seal faces, so as to lubricate the relatively rotating seal faces especially when the pressure of the product fluid is low. This condition occurs not only at start-up but at other times when the demand for fluid is relatively low or the fluid velocity head at the seal faces equals or exceeds the static pressure in the seal housing. Another advantage of the invention is the elimination of providing passages in seal rings, as taught by the prior art. Many seal rings are constructed of silicon carbide which is difficult to drill, being a very hard material.

The appended claims are intended to cover all reasonable equivalents and are to be construed as broadly as the prior art will permit.

## Claims

1. A mechanical seal assembly for machinery having a housing (12) in which fluid is to be retained and a shaft (24) extending through at least a portion of the housing (12) ; the seal assembly comprising a first non-rotatable seal ring (16) positioned abutting the housing (12) and surrounding the shaft (24), the first seal ring (16) having a seal face (20), a second rotatable seal ring (18) positioned surrounding the shaft (24) and connected thereto for rotation therewith, the second rotatable seal ring (18) having a seal face (22) positioned opposite the seal face (20) of the first seal ring (16) so that a fluid film between the seal faces is allowed when the machinery is operated, the film extending from a first location adjacent the shaft (24) to a second location spaced from the shaft (24), and means including a baffle (38 ; 70) for admitting fluid under pressure to the second location, characterized in that an annular notch (52) is provided in the first seal ring (16), the baffle (38 ; 70) has at least a portion (42 ; 70) received in the notch (52) and defining with the first seal ring (16) a restricted passage (45, 47) therebetween for the flow of lubricating fluid to the second location, the baffle portion (42 ; 70) has a surface (54 ; 74) closely adjacent the seal face (22) of the second seal ring (18) and defining a restricted space (49) therebetween, and the restricted space (49) between the baffle portion surface (54 ; 74) and the sealing face (22) of the second seal ring (18) providing a restriction to fluid flow greater than that provided by the restricted passage (45, 47) between the baffle portion (42 ; 70) and the first seal ring (16).

2. A mechanical seal assembly as claimed in claim 1, including a bore (56) in the housing (12) adapted to be connected to a source of lubricating fluid, and a cylindrical distribution groove (60) at least partly in the baffle (38) communicating with the bore (56), the restricted passage (45, 47) communicating with the cylindrical distribution groove (60) for the passage of lubricating fluid to the second location.

3. A mechanical seal assembly as claimed in claim 1 or claim 2, wherein the baffle (38) is generally cylindrical, surrounds the first and second seal rings (16, 18) and is connected to or intregral with the housing (12), the baffle portion (42) being a radially depending ring portion (42) of the baffle (38).

4. A mechanical seal assembly as claimed in claim 1, wherein the baffle (70) is a generally cylindrical ring member (70) received in the notch (52) in the first seal ring (16).

5. A mechanical seal assembly as claimed in claim 4, wherein spacer means (72) are provided to space the baffle ring member (70) from the first seal ring (16).

6. A mechanical seal assembly as claimed in claim 4 or claim 5, wherein the baffle ring member (70) abuts a closure member (76) having a passageway (78) to provide a path for the flow of lubricating fluid from a source to the second location.

## Ansprüche

1. Gleitringdichtung für eine Maschine mit einem Gehäuse (12), in dem ein Strömungsmittel zurückzuhalten ist, und einer Welle (24), die sich durch zumindest einen Teil des Gehäuses (12) erstreckt, wobei die Dichtung aufweist : einen ersten stationären Dichtring (16), der in Anlage am Gehäuse (12) angeordnet ist und die Welle (24) umgibt, wobei der erste Dichtring (16) eine Dichtfläche (20) besitzt, einen zweiten drehbaren Dichtring (18), der die Welle (24) umgebend angeordnet und mit dieser drehfest verbunden ist, wobei der zweite drehbare Dichtring (18) eine Dichtfläche (22) aufweist, die gegenüber der Dichtfläche (20) des ersten Dichtringes (16) so angeordnet ist, daß sich im Betrieb der Maschine ein Strömungsmittelfilm zwischen den Dichtflächen bilden kann, wobei sich der Film von einer an der Welle (24) angrenzenden ersten Stelle zu einer von der Welle (24) beabstandeten Stelle erstreckt, sowie ein Baffle (38 ; 70) umfassende Mittel zum Zuführen eines Druckmittels zur zweiten Stelle, dadurch gekennzeichnet, daß eine Ringnut (52) in dem ersten Dichtring (16) gebildet ist, daß das Baffle (38 ; 70) einen Abschnitt (42 ; 70) aufweist, der von der Nut (52) aufgenommen wird und mit dem ersten Dichtring (16) einen Drosselkanal (45, 47) für den Strom eines Schmiermittels zu der zweiten Stelle bildet, daß der Baffleabschnitt (42 ; 70) eine Fläche (54 ; 74) aufweist, die unmittelbar angrenzend an der Dichtfläche (22) des zweiten Dichtringes (18) liegt und dazwischen einen gedrosselten Raum (49) bildet, und daß der gedrosselte Raum (49) zwischen der Baffleabschnitt-Fläche (54 ; 74) und der Dichtfläche (22) des zweiten Dichtringes (18) eine Drosselung der Strömung bewirkt, die größer ist als die von dem Drosselkanal (45, 47) zwischen dem Baffleabschnitt (42 ; 70) und dem ersten Dichtring (16) bewirkte Drosselung.

2. Gleitringdichtung nach Anspruch 1 mit einer in dem Gehäuse (12) gebildeten Bohrung (56), die mit einer Schmiermittelquelle verbindbar ist, und einer zumindest teilweise in dem Baffle (38) gebildeten zylindrischen Verteilernut (60), die mit der Bohrung (56) in Strömungsverbindung steht, wobei der Drosselkanal (45, 47) mit der zylindrischen Verteilernut (60) in Strömungsverbindung steht, damit Schmiermittel zu der zweiten Stelle gelangen kann.

3. Gleitringdichtung nach Anspruch 1 oder 2, bei der das Baffle (38) ungefähr zylindrisch ausgebildet ist, den ersten und den zweiten Dichtring (16, 18) umgibt und mit dem Gehäuse (12) verbunden oder einstückig ausgebildet ist, wobei der Baffleabschnitt (42) ein radial abstehender Ringabschnitt (42) des Baffles (38) ist.

4. Gleitringdichtung nach Anspruch 1, bei der das Baffle (70) ein im wesentlichen zylindrisches Ringteil (70) ist, das von der Nut (52) im ersten Dichtring (16) aufgenommen wird.

5. Gleitringdichtung nach Anspruch 4, bei der Abstandsmittel (72) vorgesehen sind, um das Baffle-Ringteil (70) zu dem ersten Dichtring (16) zu beabstanden.

6. Gleitringdichtung nach Anspruch 4 oder 5, bei der das Baffle-Ringteil (70) an einem Verschlußteil (76) mit einem Durchlaß (78) anliegt, um einen Pfad für den Schmiermittelstrom von einer Quelle zu der zweiten Stelle zu bilden.

**Revendications**

1. Joint mécanique pour machinerie comportant un logement (12) dans lequel du fluide doit être maintenu et un arbre (24) s'étendant à travers au moins une partie du logement (12) ; le joint comportant une première bague d'étanchéité non rotative (16) placée en aboutement avec le logement (12) et entourant l'arbre (14), la première bague d'étanchéité (16) ayant une face d'étanchéité (20), une seconde bague d'étanchéité rotative (18) placée en entourant l'arbre (24) et reliée à celui-ci pour tourner avec lui, la seconde bague d'étanchéité rotative (18) présentant une face d'étanchéité (22) placée à l'opposé de la face d'étanchéité (20) de la première bague d'étanchéité (16) de sorte qu'un film fluide entre les faces d'étanchéité est permis lorsque la machinerie fonctionne, le film s'étendant entre un premier emplacement contigu à l'arbre (24) et un second emplacement distant de l'arbre (24), et un moyen comportant un déflecteur (38 ; 70) pour admettre du fluide sous pression dans le second emplacement, caractérisé en ce qu'une encoche annulaire (52) est ménagée dans la première bague d'étanchéité (16) ; le déflecteur (38 ; 70) comporte au moins une partie (42 ; 70) reçue dans l'encoche (52) et définissant avec la première bague d'étanchéité (16) un passage restreint (45, 47) entre eux pour l'écoulement du fluide de lubrification jusqu'au second emplacement, la partie (42 ; 70) du déflecteur présente une surface (54 ; 74) étroitement contiguë à la face d'étanchéité (22) de la seconde bague d'étanchéité (18) et définissant un espace restreint (49) entre elles, et l'espace restreint (49) entre la surface (54 ; 74) de la partie du déflecteur et la face d'étanchéité (22) de la seconde bague d'étanchéité (18) fournissant une limitation à l'écoulement du fluide supérieure à celle créée par le passage restreint (45, 47) entre la partie (42 ; 70) du déflecteur et la première bague d'étanchéité (16).

2. Joint mécanique selon la revendication 1, comprenant un alésage (56) dans le logement (12) destiné à être connecté à une source de fluide de lubrification, et une rainure cylindrique de distribution (60) au moins en partie dans le déflecteur (38) communiquant avec l'alésage (56), le passage restreint (45, 47) communiquant avec la rainure cylindrique de distribution (60) pour le passage du fluide de lubrification jusqu'au second emplacement.

3. Joint assemblé selon la revendication 1 ou la revendication 2, dans lequel le déflecteur (38) est généralement cylindrique, entoure les première et seconde bagues d'étanchéité (16, 18) et est connecté au logement (12), ou est en une pièce avec lui, la partie (42) du déflecteur étant une partie (42) de bague radialement dépendante du déflecteur (38).

4. Joint mécanique selon la revendication 1, dans lequel le déflecteur (70) est un élément de bague généralement cylindrique (70) reçu dans l'encoche (52) de la première bague d'étanchéité (16).

5. Joint mécanique selon la revendication 4, dans lequel des moyens d'entretoise (70) sont prévus pour espacer l'élément (70) de bague de déflecteur par rapport à la première bague d'étanchéité (16).

6. Joint mécanique selon la revendication 4 ou la revendication 5, dans lequel l'élément (70) de bague de déflecteur bute contre un élément de fermeture (76) comportant un canal (78) pour former un trajet pour l'écoulement du fluide de lubrification entre une source et le second emplacement.

**FIG. I**

**FIG. 3**

**FIG. 2**

FIG. 3

FIG. 4